# EUROPEAN PATENT SPECIFICATION

(11) **EP 2 462 564 B1**
(45) Date of publication and mention of the grant of the patent: **09.04.2014**
(21) Application number: 10736710.4
(22) Date of filing: 23.07.2010
(51) Int. Cl.: G06T 15/04, G06T 19/00

(54) **REPRESENTATION OF COMPLEX AND/OR DEFORMABLE OBJECTS, AND VIRTUAL FITTING OF WEARABLE OBJECTS**
DARSTELLUNG VON KOMPLEXEN UND/ODER VERFORMBAREN OBJEKTEN UND VIRTUELLE ANPROBE TRAGBARER OBJEKTE
REPRÉSENTATION D'OBJETS COMPLEXES ET/OU DÉFORMABLES, ET ESSAYAGE VIRTUEL D'OBJETS ENFILABLES

(30) Priority: 04.08.2009 DE 102009036029
(43) Date of publication of application: 13.06.2012
(73) Proprietor: Fraunhofer Gesellschaft zur Förderung der angewandten Wissenschaft E.V., 80686 München (DE)
(72) Inventor: EISERT, Peter, 10587 Berlin (DE); HILSMANN, Anna, 10243 Berlin (DE)
(74) Representative: Schenk, Markus
(86) International application number: PCT/EP2010/060734
(87) International publication number: WO 2011/015470

(56) References cited:
- US-A1- 2006 202 986
- US-A1- 2009 116 766
- KJAERSIDE K ET AL: "ARDressCode: augmented dressing room with Tag-based Motion Tracking and Real-Time Clothes simulation", CENTRAL EUROPEAN MULTIMEDIA AND VIRTUAL REALITY CONFERENCE, 1 January 2005 (2005-01-01), pages 43-48, XP002395984,
- NEBOJSA JOJIC ET AL: "Computer Modeling, Analysis, and Synthesis of Dressed Humans", IEEE TRANSACTIONS ON CIRCUITS AND SYSTEMS FOR VIDEO TECHNOLOGY, vol. 9, no. 2, 1 March 1999 (1999-03-01), XP011014554, IEEE SERVICE CENTER, PISCATAWAY, NJ, US ISSN: 1051-8215
- EHARA J ET AL: "Texture overlay for virtual clothing based on PCA of silhouettes", 2006 IEEE/ACM INTERNATIONAL SYMPOSIUM ON MIXED AND AUGMENTED REALITY, 2006, pages 139-142, XP002621094, IEEE PISCATAWAY, NJ, USA ISBN: 1-4244-0650-1
- RYAN WHITE ET AL: "Retexturing Single Views Using Texture and Shading", COMPUTER VISION - ECCV 2006 LECTURE NOTES IN COMPUTER SCIENCE;;LNCS, vol. 3954, 1 January 2006 (2006-01-01), pages 70-81, XP019036571, SPRINGER, BERLIN, DE ISBN: 978-3-540-33838-3
- YANWEN GUO ET AL: "Mesh-Guided Optimized Retexturing for Image and Video", IEEE TRANSACTIONS ON VISUALIZATION AND COMPUTER GRAPHICS, vol. 14, no. 2, 1 March 2008 (2008-03-01), pages 426-439, XP011195680, IEEE SERVICE CENTER, LOS ALAMITOS, CA, US ISSN: 1077-2626, DOI: 10.1109/TVCG.2007.70438
- A. HILSMANN AND P. EISERT: "Tracking and Retexturing Cloth for Real-Time Virtual Clothing Applications", PROC. MIRAGE 2009 - COMPUTER VISION/COMPUTER GRAPHICS COLLABORATION TECHNIQUES AND APPLICATIONS, 4 May 2009 (2009-05-04), XP002631064,
- V. Scholz and M. Magnor: "Texture Replacement of Garments in Monocular VideoSequences", Eurographics Symposium on Rendering, 2006, pages 1-8, XP002631065, Retrieved from the Internet: URL:www.mpi-inf.mpg.de/~vscholz/egsr06/egs r06-sub.pdf [retrieved on 2011-04-01]

## Description

The present invention relates to the representation of complex and/or deformable objects, and virtual fitting of wearable objects such as clothes.

Augmented Reality applications comprise, among other things, fusing computer-generated objects with real video material. To this end, for example, the lighting conditions, the precise position and orientation or geometric deformation of a real object are estimated within the video sequence so as to replace or supplement said object by a computer-generated virtual object such that the artificial object seems to be a natural integral part of the scene. Most Augmented Reality applications are interactive solutions wherein the current and instantaneous surroundings captured by one or several cameras are supplemented by individual information and objects that are, in addition, dependent on the user's current movement or requirement. This necessitates strict real-time capability both in terms of analyzing the scene, e.g. with regard to movement, deformation, illumination, in terms of integrating the artificial objects into the shared representation. This becomes particularly difficult with objects having complicated geometries and/or deformable or elastic properties, such as fabrics, clothing, hair, etc. For some applications, such as virtual fitting of pieces of clothing, pairs of glasses, jewelry and hairstyles, it all depends, in addition, on a realistic and life-like dynamic representation, which in most cases requires a large amount of effort and conflicts with the real-time requirements.

A virtual-mirror application is described, for example, by P. Eisert, P. Fechteler and J. Rurainsky: "Virtual Mirror: Real-Time Tracking of Shoes in Augmented Reality Environments", Proc of Int. Conf. on Image Processing (ICIP 2007), San Antonio, Texas, 2007, A. Hilsmann and P. Eisert: "Tracking and Retexturing Cloth for Real-Time Virtual Clothing Applications", Proc. Mirage 2009 - Computer Vision/Computer Graphics Collaboration Techniques and Applications, Rocquencourt, France, May 2009. A user is filmed by a camera and can view himself/herself on a display, which takes on a mirror function, in computer-generated clothing in real-time. For this purpose, his/her poses and movements are estimated, and the virtual piece of clothing is rendered onto his/her body in the video frame such that in the mirror image it appears as if he/she were actually wearing it. To provide a realistic impression, the virtual piece of clothing must follow all of the user's movements and must exhibit a realistic fall of the folds and material properties.

US 2006/202986 A1 (OKADA RYUZO [JP] ET AL) published 14 September 2006, describes a "virtual clothing modelling apparatus" which "displays images of clothing that a person wishes to try on being synthesized onto the body of the person. The clothing images are combined with the frames of an image sequence (of the person). The person evaluating the clothing can see how the clothing will appear on that person, without actually trying on the clothes". The apparatus "synthesizes the images of the clothes to be tried on by estimating the posture of the person. Therefore, the person can see his/her image in a desired posture as if he or she were actually trying on the clothes. As the person moves in front of the camera, the person can see his/her image, with the clothing, undergoing the same motion".

The apparatus of US 2006/202986 uses a posture dictionary B containing various posture data relating to e.g. joint angles of the human body. The posture data are used to control the shape of the so-called "clothes figure data". "A posture-estimating unit 2 finds a feature of the person from the present image frame within the image sequence taken by the image capturing unit 1. By using this feature, the posture dictionary B and the three-dimensional figure data A, the posture-estimating unit 2 estimates the posture of the person at the time corresponding to the present image frame. The candidate posture-generating unit 22 selects a candidate posture resembling the estimated posture in the preceding frame out of the posture data in the posture dictionary B. The candidate posture-generating unit 22 computes the similarity between the posture a and the posture b as described below. Finally, the optimum posture selection unit 24 selects a posture having the highest degree of similarity as the estimated posture out of all postures for which a similarity has been calculated".

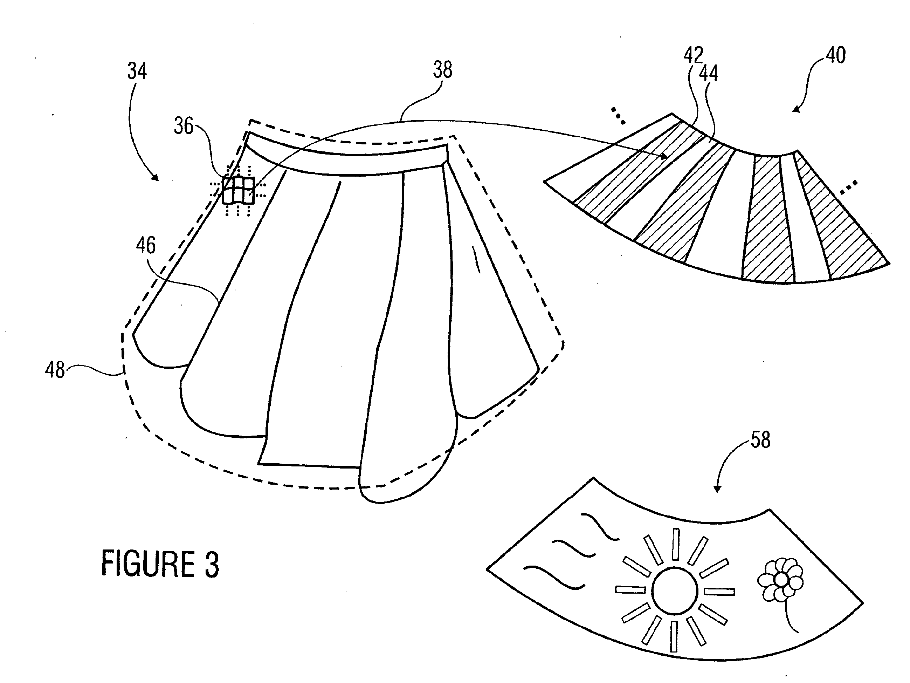

"When few postures are registered in the posture dictionary B, it becomes difficult to reflect fine changes between the postures. In this case, the estimated posture has low precision. When an image of high quality is required (e.g., fashion show), the image generated by using the above estimated posture may not be capable of maintaining sufficient quality. As shown in FIG. 3, therefore, the posture correction unit 3 corrects the time series data of the estimated postures into a smooth and natural motion".

There are various possible approaches to analyzing and representing virtual objects with many degrees of freedom, for example fabric and clothing, which, however, either suffer in terms of real-time capability or offer representations that are not very realistic. The artificial objects may be modeled in terms of their physical properties, for example (shape, color, material, reflection, movement, and deformation), the parameters of which are estimated from the scene, or camera pictures, and are finally represented using computer graphic methods. The naturalness of the representation here depends on the accuracy of the modeling, and realistic representations often have several thousand degrees of freedom, which require a lot of effort to estimate. In this representation, there is therefore a difficult trade-off between high quality (many parameters) with costly processing, and a real-time solution with a very limited realism.

On the one hand, it is possible to have realistic representations that achieve high quality by using suitable estimation methods and more accurate modeling. For pieces of clothing, the shape may be obtained, for example, by means of 3D reconstructions from several camera perspectives. This is described by D. Pritchard and W. Heidrich: "Cloth Motion Capture", Proc. of Eurographics (Eurographics 2003), Seiten 263-271, 2003, R. White, D. Forsyth and J. Vasanth: "Capturing Real Folds in Cloth", EECS Department, University of California, Berkley, 2006, D. Bradley, T. Popa, A. Sheffer, W. Heidrich and T. Boubekeur: "Markerless Garment Capture", ACM Transactions on Graphics (SIGGRAPH), Los Angeles, CA, 2008 and M. Vlasic, I. Baran, W. Matusik and J. Popovic. "Articulated Mesh Animation from Multi-View Silhouettes", SIGGRAPH 2008, Los Angeles, CA, 2008. In this document, the precise 3D shape of the fabric with all of the details, such as folds, is reconstructed. However, challenging and complicated camera setups are required, and calculating such detailed 3D models requires a lot of computing time and will not be able to be implemented in real-time in the next few years.

On the other hand, there are approaches to representing e.g. virtual pieces of clothing in real-time and with simpler capturing units. However, these are either aimed only at re-texturing a small section - which is often square - of the piece of clothing, such as in the version by J. Pilet, V. Lepetit and P. Fua: "Augmenting Deformable Objects in Real-Time", International Symposium on Mixed and Augmented Reality. Vienna Austria, 2005 and A. Hilsmann and P. Eisert: "Optical Flow Based Tracking and Retexturing of Garments", Proc. of Int. Conf. on Image Processing (ICIP 2008), San Diego, CA, 2008, instead of representing a new, computer-generated piece of clothing. Or what is represented is computer-generated clothing which, however, does not move in line with the person, as in the version of http://www.iconnicholson.com/nrf07/, so that the person needs to position himself/herself in the right manner, and thus the interactivity and the realism are lost.

Therefore, there is a necessity of a scheme allowing compatibility of a realistic appearance of a complex, computer-generated object with real-time capability. To put this somewhat more generally, there is a necessity of a scheme for representing complex and/or deformable objects which enables a better trade-off between moderate computing power, on the one hand, and a realistic impression of the object, on the other hand.

Therefore, it is the object of the present invention to provide a scheme for representing complex and/or deformable objects, as well as a scheme enabling virtual fitting of wearable objects, which schemes enable the improved trade-off mentioned above.

This object is achieved by a device as claimed in claim 1, and by a method as claimed in claim 8.

The core idea of the present invention is that complex and/or deformable objects may be represented, under a specified scene condition, with an improved trade-off between moderate computing power, on the one hand, and a realistic representational impression, on the other hand, when using a database comprising, for each of a multitude of different scene conditions, a view of an object which shows the object under a respective scene condition, and associated texture map mapping information specifying a mapping between a projection of the object to the respective view and a texture map corresponding to a desired appearance of the object, and comprises looking up, in said database, a view that shows the objects under a scene condition similar to the predefined scene condition, and subsequently adapting said view to the predefined scene condition and texturing the object on the basis of the texture map mapping information. This approach allows bringing forward processes and/or calculations that require a large amount of computing power to an initialization phase, so that life-like views may be stored in the database, whereas the remaining complexity in terms of looking up and adapting may be kept low, since said processing only bridges the deviation from the predefined scene condition, or is provided for adaptation to the predefined scene condition, and since, consequently, errors made in the adaptation have hardly any visible effect on the result due to simplifications made in terms of calculation, so that the latter adaptation may possibly even be performed in real-time. The representation's closeness to reality therefore does not have to be degraded, since a sufficient amount of time and computing power may be spent on creating the views contained in the database so as to guarantee the closeness to reality. By way of example, the views stored in the database may have been obtained from actual camera shots. Views obtained from complicated and complex simulations of 3D models of the object would obviously also be possible, however, since processing takes place in the initialization phase.

With regard to applications concerning representation of objects that may be worn on the body in a recognized posture, a core idea of the present invention is also that complex and/or deformable objects may be represented, in a recognized posture, with an improved trade-off between moderate computing power, on the one hand, and a realistic impression of the representation, on the other hand, when a database is used which has a multitude of views of the object that may be worn on the body, which views show the object that may be worn on the body in a multitude of different postures, so as to look up, within said database, a view showing the object in a posture similar to the recognized posture, and then to adapt said view to the recognized posture. As has been mentioned, this approach enables bringing forward processes and/or calculations that require a large amount of computing power to an initialization phase, so that life-like views may be stored in the database, whereas the remaining complexity in terms of looking up and adapting may be kept low, since said processing only bridges the deviation from the predefined scene condition, or is provided for adaptation to the predefined scene condition, and since, consequently, errors made in the adaptation have hardly any visible effect on the result due to simplifications made in terms of calculation, so that the latter adaptation may possibly even be performed in real-time.

In accordance with the present invention, the scene conditions is one on which a location of the object in the desired two-dimensional representation or view depends, i.e., for example, a three-dimensional location of the object in the scene shot, a posture of the object, such as the posture of the arms and legs in the case of an object worn on the body, and a measurement of the object, such as a body measurement. In order to adapt the view obtained from the database which shows the object under a similar scene condition to the predefined scene condition, a simple parameterizable 3D model of an approximate shape of the object may be used. The storage capacity required for the database therefore remains low. On the other hand, the computing expenditure for the parameterizable 3D model and its re-parameterization for adaptation to the predefined scene condition does not require a large amount of effort, since the description of the approximate shape of the object by the parameterizable 3D model is perfectly sufficient, and since the details, such as a fall of the folds, that otherwise would have to be treated in a computationally expensive manner, are contained within the views and/or the texture map mapping information within the database.

In accordance with the present invention it is even possible to re-texture the views of the object within the database in that the database contains a texture mapping which maps the surface of the 3D model, or object points, to the texture map; via said texture map, the surface sites associated with the pixels are assigned texture map values that - weighted with the brightness values that are associated with the pixels in the view in the database and that represent a texture-independent, or textureless, monochromatic reflectivity distribution of the object, said reflectivity distribution nevertheless taking into account the lighting direction and scattering properties of the object in the respective posture - provide the object with the desired appearance with the desired texture from the texture map. The calculations required for re-structuring are therefore limited to inexpensive indexing of texture map data in combination with brightness weighting, which takes into account the possibly complex structure of the object and has already been determined in the initialization phase.

Embodiments of the present invention thus enable a representation of objects, e.g. clothing and hairstyles, which enable real-time processing of the virtual objects while providing a high-quality, natural representation of same.

Preferred embodiments of the present invention will be explained in more detail below with reference to the accompanying figures, wherein:
- Fig. 1: shows a block diagram of a device for representing complex and/or deformable objects in accordance with an embodiment;
- Fig. 2: shows a flow chart of a method of representing complex and/or deformable objects as may be performed, for example, by the device of Fig. 1, in accordance with an embodiment;
- Fig. 3: shows a sketch for illustrating the texturing and/or re-texturing and scene-condition adaptation of Fig. 2 in accordance with an embodiment;
- Fig. 4: shows a device for virtual fitting of wearable objects in accordance with an embodiment.

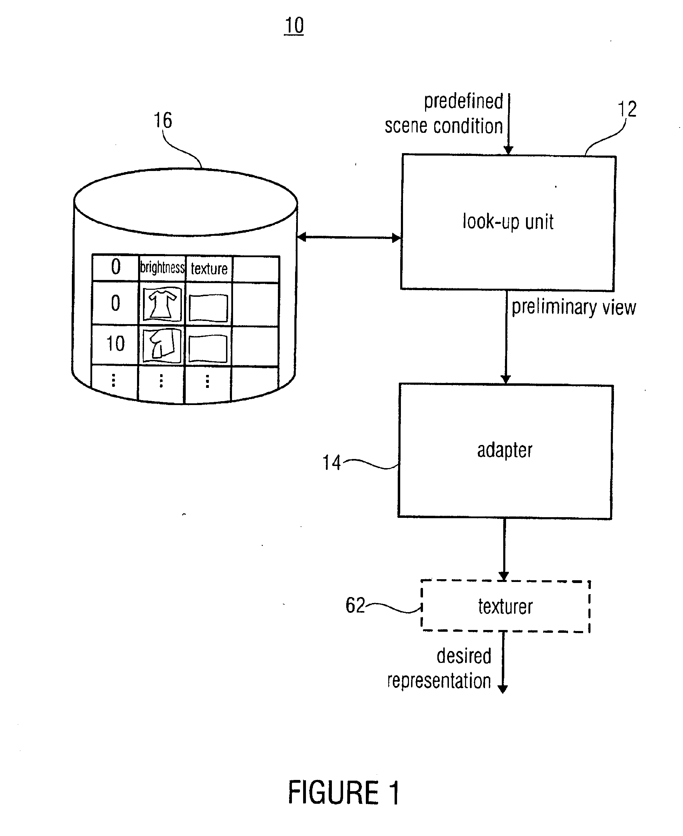

Fig. 1 shows an embodiment of a device for representing complex and/or deformable objects, said device generally being indicated by 10. The device comprises a look-up unit 12, an adapter 14 as well as a database 16 and, optionally, a texturer 62.

The database 16 has a multitude of views of an object stored therein which show the object under a multitude of different scene conditions. As will be described below, it is possible to store, for each view, the corresponding scene condition under which said view was shot, within the database 16. In addition, for each view, a segmentation mask may be stored which describes an object demarcation that is accurate to the sub-pixel. Further exemplary details will be described below.

The look-up unit 12 is configured to look up, by using a predefined scene condition, one or more first, or preliminary, view(s) in the database 16, said view(s) showing the object under (a) scene condition(s) similar to the predefined scene condition. The adapter 14, in turn, is configured to create a new view, which represents the desired representation, by adapting the preliminary view(s) to the predefined scene condition. The optionally provided texturer 62, which may optionally contribute to creating the desired representation, shall be addressed below in more detail.

The object may be a piece of clothing or a hairstyle, i.e. objects having a large number of degrees of freedom and which are difficult to realistically simulate, or for which the computing power required to compute realistic representations is high. In the following, it shall be assumed, by way of example, that the object is a piece of clothing. However, it shall be noted at this point already that even these specific illustrations are only representative of complex and/or deformable objects in general.

The predefined scene condition and the different scene conditions under which the views within the database 16 show the object may, for example, be defined by the location of the object, a posture of the object and/or a measurement of the object. In other words, the predefined scene condition has a predefined value, and the multitude of views in the database 16 comprise views of the object under different values for a location of the object, a posture or deformation of the object, or a measurement of the object. If the object is a piece of clothing, for example, the location of the object will be defined, for example, by the position of the wearer of the piece of clothing, the posture of the object will be defined by a posture of the arms and/or legs or generally by an overall posture of the wearer of the piece of clothing, and a measurement of the object will be defined by body measurements of the wearer of the piece of clothing. In other words, the database 16 may have a multitude of views with associated scene conditions stored therein, which show a piece of clothing in various positions, in various postures and with various body measurements for the wearer of the piece of clothing.

The views stored within the database 16 might have been obtained be real shots, i.e. camera shots of a physical embodiment of the object. However, it would also be possible, of course, for the views within the database 16 to have been obtained by means of 3D simulation. The high expenditure required for simulation would only incur for creating the database 16, i.e. during an initialization phase, and therefore does not conflict with real-time applications.

As was already described, the look-up unit 12 selects, among the views 16, one or several which show(s) the object under (a) scene condition(s) similar to the predefined scene condition. The similarity may be quantified by any suitable distance measurement. Subsequently, the adapter 14 adapts the view(s) thus obtained to the predefined scene condition. To this end, the adapter 14 may use information stored in the database 16 and associated with the individual views contained therein. For example, in addition to the scene condition, the views in the database 16 may also have the segmentation information, indicated above, associated with them, which segmentation information shows which pixels of the respective view regarding the respective scene condition actually belong to the object and which represent background only. Moreover, the views within database 16 are possibly stored in the texture-independent manner, according to which color and brightness variations of the object in the respective view have been subtracted out on the basis of a varying texture, for example when the picture was taken, so as to yield a picture for a uniform surface color, e.g. white or any other neutral color. In addition, the views within the database 16 may have geometry information associated therewith, i.e. information enabling association of depth and distance values with pixels or with other subdivisions of the projection of the object into the respective view, or a laterally varying depth and/or distance association with the projection of the object into the respective view. In this case, the views therefore represent some kind of distance images of the object with the different scene conditions, or with textures - representing the fine structure - of an approximate model of the object under the various scene conditions.

A deviation with regard to the location of the object between the looked-up view and the predefined location might thus be corrected on the part of the adapter by means of rotation, translational movement, posture adaptation, deformation, or a combination of same. In the following embodiments, a possibility will be described in accordance with which the adapter 14 uses a parameterizable 3D model of an approximate shape of the object for adaptation to the predefined scene condition so as to adapt the preliminary view to a view with the predefined scene condition. The parameter information may be stored within the database such that it is associated with the respective view, or it may result from the predefined scene condition used for indexing. Of course, a combination of both possibilities is also feasible.

Additionally or alternatively, texture map mapping information may be present within the database, i.e. information enabling mapping between the projection of the object in the respective view and a texture map which describes a surface of the object and which may be filled with content corresponding to the desired texture. The mapping may be defined, within the database, via the detour of an explicit mapping between the surface of the 3D object and the texture map. The association, or projection, of the pixels with, or onto, surface point(s) of the 3D model may also be determined or stored in advance within the database 16 or may take place on-line during adaptation of the view to a desired view.

Before the mode of operation of the device of Fig. 1 in accordance with an embodiment of the present invention is described in more detail, it should be noted that the predefined scene condition or the various scene conditions may be additionally or alternatively defined by, or differ in terms of, a lighting situation, including for example an incident direction of lighting.

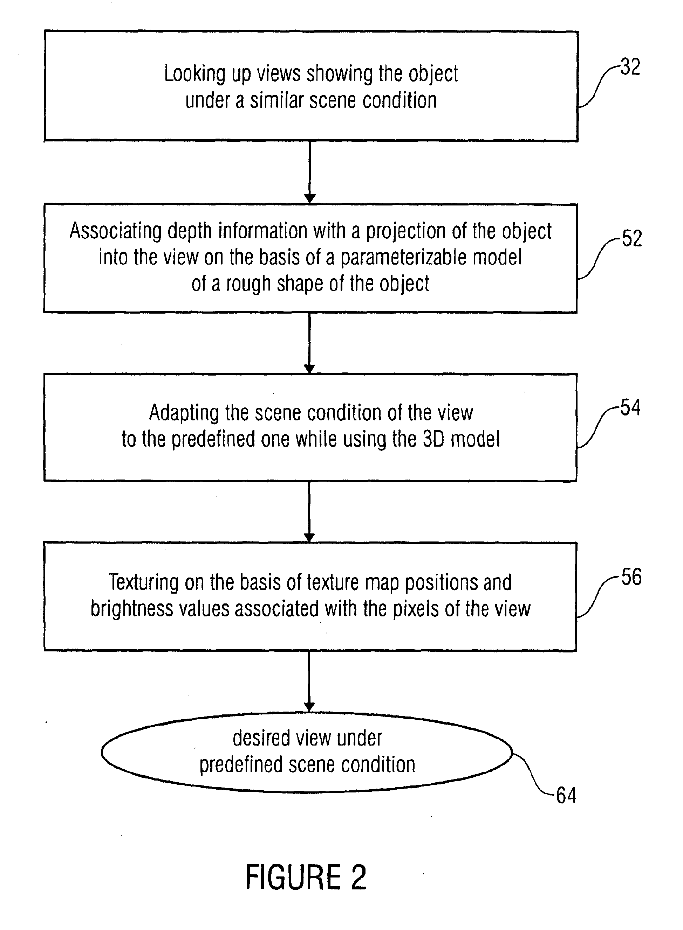

Thus, Fig. 2 shows a method of representing complex and/or deformable objects as may be performed, for example, by the device of Fig. 1.

A first method step 32 comprises looking up, in the database 16, a view that shows the object under a scene condition that is similar to a predefined scene condition. In the case of Fig. 1, looking-up 32 is performed by the look-up unit 12. It shall be assumed by way of example that the object is an object that may be worn on the body, e.g. which may be put on, and that the predefined scene condition is a location within a room, a posture and/or one or several body measurements for the wearer of the wearable object. In other words, the scene condition comprises a value of one or several variables concerning the spatial location, the posture and/or the one or several body measurements of the wearer, a distance measurement being defined which allows, in step 32, selection of that view - among the views of the database 16 - whose associated values minimize, for the same variables, the distance defined by the distance measurement. It would also be possible, in step 32, to determine from the database 16 instead of only one view more than one view which view shows the object under similar scene conditions as the predefined scene condition. It would be possible to select that view, or those views, which result(s), in the vector space of the scene conditions, in the smallest distance from the predefined scene condition. In other words, the database 16 comprises, for several vectors whose components represent the scene conditions, views among which the most similar one(s) is/are selected in step 32, depending on the distance of said vectors to the vector describing the predefined scene condition. In case several views have been selected whose components represent the most similar scene conditions, they are then fused into one view in a weighted manner, depending on the distance of said vectors to the vector describing the predefined scene condition.

Fig. 3 shows, by way of example, a view from the database 16 for any of the various scene conditions. In Fig. 3, the object is a skirt 34, by way of example. Fig. 3 also shows a view of the skirt 34 for a specific position or location within the room, a specific orientation of viewing direction of the wearer of the skirt (not shown), possibly for a specific leg posture and possibly for a specific abdominal or waist circumference. The view shown on the left-hand side in Fig. 3 may have been obtained by a camera shot of an actual skirt or by means of costly simulation. The pixels 36 of the view are only locally indicated in Fig. 3. For each of said pixels, there is a brightness value which, independent of the texture or in a textureless manner - for a monochromatic fabric of the skirt 34, as it were - indicates a reflectivity for light projected into the observer's eye, said reflectivity being specified, in turn, by the scattering properties of the fabric, the local orientation of the normal of the fabric surface as well as by the lighting situation used. This means that a texture that is present when the picture is taken, or its effect on the brightness of the pixels 36, has already been subtracted out to yield the appearance of a monochromatic skirt.

In Fig. 3, the skirt 34 is depicted in a line drawing. The contour lines thus surround the pixels 36 which represent the skirt. It is possible that the database also contains, or has stored therein, the surrounding pixels, which would then represent, for example, the background present when the picture is taken. In this case, for a description of the silhouette that is accurate to the pixel, a segmentation mask may also be stored within the database in addition to the view, said segmentation mask indicating for each pixel of the value, for example by means of a transparency value, whether said transparency value represents the object or belongs to the foreground (such as pixels 36), or whether same belongs to the background.

In addition, in accordance with the embodiment of Fig. 3, each pixel 36 may have a texture map position associated with it which indicates - as is shown by arrow 38 in Fig. 3 - the position of the pixel of the skirt 34 in the view on a texture map 40, which in turn corresponds to a area parameterization of the fabric underlying the skirt 34, or represents a map projection of the fabric surface into a map plane. The texture map projection may be defined by baryzentric coordinates, by way of example. In Fig. 3, the regions 42 of the texture map 40 which are referred to by pixels 36 of the view 38 are shown to be hatched, and as may be gathered from Fig. 3, it is possible for said regions 42 to be interrupted, or non-continuous, and to have gaps 44 between each other which are not visible due to, for example, falls of folds 46 being present in the view of the skirt 34, and which are therefore not associated with any pixel of the view. It would be possible for the database to contain information which directly describes the mapping 38. However, it is also possible for the texture map mapping information to indirectly define the mapping 38, namely by means of mapping the surface of a 3D model - to be described below - of the approximate shape of the object to the texture map.

As was already mentioned above, the views within the database 16 may be obtained from actual shots. For example, a person with the skirt 34 is filmed in various positions, orientations and postures. In addition to the one camera that takes the actual shots from whose pixel values the above-mentioned brightness values are then reconstructed, further ones may be used that serve to reconstruct the person's current position, orientation and posture in the respective shot and therefore allow determining the scene condition underlying the respective shot. The prototype of the skirt may comprise a pattern that simplifies reconstruction of the above-mentioned data projection, i.e. an association of texture map vectors with the individual pixels. Once this has happened, the pixel values of the individual shots may be texture-corrected, as was mentioned above, so that the previously mentioned texture-independent similarity values result.

In addition to the above-mentioned information, there is also a parameterizable 3D model for each view in accordance with the embodiment of Fig. 3, said parameterizable 3D model describing the approximate shape of the object, or skirt, 34. In Fig. 3, for example, the contour of the projection of such a simplified 3D model has been drawn into the view of the skirt 34 by means of a dashed line, this 3D model here being, by way of example, the lateral area of a truncated cone. The information on the parameter definition of the 3D model may be defined such that the model comes as close to the shape of the skirt 34 as possible under the potential parameter settings. Said information may be explicitly stored within the database 16 such that it is associated with the individual pieces of information, or it may implicitly result from the scene condition with which the respective view is associated. It would also be possible to have a combination in accordance with which explicit indications supplement the underlying scene condition regarding the parameter information. However, the information on parameterizing the 3D model may also be defined such that the model comes as close as possible to the shape of the skirt 34 under the potential parameter settings on the one hand, but is selected large enough for it to fully contain, in the corresponding view, the object or its silhouette, on the other hand. The information on the parameter setting of the 3D model may even be defined such that the 3D model may be mutually transferrable for all views or scene conditions, in a conform manner, or by means of rotations and translations, i.e. that the 3D model is common to all of the scene conditions, specifically in such a manner that the projection of the model in the location associated with the respective view into the respective view completely contains the object or its silhouette in the view for all of the views or scene conditions. The shape of the 3D model might therefore be stored within the database 16 for all of the scene conditions to share, while only the location would be individually stored specifically for each of the scene conditions. However, it is also possible for the 3D models for the various views to be shaped individually. For example, the 3D models may be grid models. The number of surface nodes or areas might be the same across the views. In this case, it would also be possible that the grid models are different for the various views, but that the nodes or unit areas of the 3D models are selected such that they continuously change across the definition range of the scene conditions. For example, during the initialization phase, the 3D models are not selected independently, but precisely under the secondary condition that has just been mentioned.

In the exemplary case of Fig. 3, the 3D model is relatively simple, but it is also possible for the parameterization to be designed such that the fall of the folds 46 of the skirt may be, at least partly, reproduced. The purpose of the 3D model may be gathered from the following description. As it will also be described there, the 3D model is optional, in addition. In accordance with an alternative implementation of the embodiment of Fig. 3, the parameterizable 3D model has been omitted.

The parameterizable 3D model 48 describing the approximate shape of the object is also registered with all of the views of the database 16. In a step 52, an associated 3D point on the 3D model 48 is associated with the pixels 36 of the view(s) selected in step 32. It is via the association of points on the 3D model surface, on the one hand, and the pixels of the respective view of the database 16, on the other hand, that affiliations with various views may be determined between the points of the 3D models, which affiliations may be utilized for continuous fade-over and fusing in the event of several views, selected in step 32, in the subsequent step 54 of adapting the scene condition within the database to the desired scene condition. In particular, step 54 comprises adapting a view from the database 16, which view was obtained in step 32, to the desired scene condition of the skirt 34 by using the parameterizable model 48. This may be effected by rotating, displacing, scaling or deforming the 3D model, so that the 3D model from the view within the database 16 transitions to the desired posture, location, etc. More precisely, the pixels 36 are initially associated, in step 52, with geometry points on the surface of the model 48. The association specification simply provides a projection of the pixels 36 onto the surface points facing the observer. The association specification may be calculated on-line in step 52. Alternatively, the association specification is only read out from the database in step 52. The 3D models thus "textured" - in the event of several views - are then transferred to the desired posture, location, etc. in step 54 by means of rotation, displacement, scaling or deformation, and are merged there into a shared view, it being possible to exploit, for transferring and merging, the association of the pixels from the individual views with points on the model surface. The resulting view is adapted to the desired scene condition.

Since the 3D model 48 represents only a rough approximation of the geometry of the skirt 34, the animation, deformation and representation may be realized at low effort, and thus, real-time requirement in terms of analysis and synthesis may be met. The details that are necessary for the representation to be realistic, such as fall of the folds, material structures, or detail-rich silhouettes are described by the images within the database 16 and by any segmentation masks that may exist.

In the exemplary case of Fig. 3, the model may also contain dynamic movement modeling in addition to the deformation parameters so as to simulate course movements of the fabric when the person is moving. In this case too, small deformations may be described by the views of the database 16 which have been determined from the associated posture parameters in step 32.

The result of step 52 is therefore an approximate 3D model 48 of the skirt 34 that is adapted to the scene condition of the selected view.

Step 52 enables adapting the scene condition under which the view selected in step 32 represents the object, or skirt, 34, to the predefined scene condition, specifically in that depth and geometry information is used that is associated with the projection of the object into the respective view. It is possible by means of the 3D model that in step 54, the adapter 14 translationally offsets, rotates or tilts or even extends or compresses the skirt 34 from the view of step 32 so as to adapt to the scene condition under which the view represents the skirt 34 to the predefined scene condition. The result of step 54 ultimately is a lateral displacement or distortion of the regularly arranged pixel positions of the preliminary view determined in step 32 to other positions while maintaining the associated brightness values or texture map positions.

It shall once again be emphasized at this point that steps 52 and 54 require relatively little computational effort. Even though the degree of complexity of the 3D model, as mentioned above, may vary, the computation expenditure in terms of adaptation to the predefined scene condition remains low irrespective thereof, since the most complex calculations are restricted to displacing the pixel positions in the view selected in step 32. Reflection conditions and the shape of the falls of the folds 46 need not be simulated and calculated. They continue to be taken over from the database. Since only minor scene condition deviations must be balanced out, the simplification for the user will be transparent later on.

It shall also once again be noted that in step 32, more than one view may be obtained from the database. In this case, steps 52 and 54 are performed for each of said views, specifically, for example, with subsequent fusing of the adapted views. The same applies to step 56, which will be described below.

In step 56, (re-)texturing is performed on the basis of the texture map mapping information or of the texture mapping of the model surface to the texture map 42 and the brightness values of the view. In the case of Fig. 3, for example, a texture or a pattern 58 is shown by way of example that is to be used for texturing the skirt 34 in the desired view or representation. The texturer 62 which is represented as being optional in the device of Fig. 1 uses, for step 56, the texture map mapping information from the database 16 so as to associate the surface sites such as nodes or triangles, which have been associated with the pixels 36, with locations of the texture map 42 into which the desired texture 58 is entered, the respective texture map value referred to being weighted with the brightness value of the pixel 36 associated with the respective surface site. In this manner, the desired view results which shows the object, or skirt, 34 under the predefined scene condition, said desired view being indicated by reference number 64 in Fig. 2. Put differently, the association of the texture map values with the pixels 36 is effected indirectly in the presently described embodiment of Fig. 3, since the pixels are associated with surface points of the 3D model in step 52 already, and since said points have been displaced in step 54 by way of adaptation to the desired scene condition. Therefore, the latter points indirectly also have the brightness values from the respective view within the database 16 associated with them, and they also have a respective texture map value from the texture map 58 associated with them, namely by using the database 16, which also comprises, in addition to the 3D model parameters, a mapping for the respective view, which mapping then maps that part of the surface of the 3D model onto the texture map which is visible and also overlaps with the projection of the object.

It shall be noted that steps 54 and 56 may be exchanged. Step 56 might even be performed prior to step 52. In addition, it has not previously been explicitly pointed out that an interpolation may also take place so as to obtain the desired view 64 in order to retransfer the pixel displacement caused in step 54 to a regular pixel array. In addition, it shall be noted that instead of the parameterizable 3D model, an approach may be adopted - by using the contour 48 - in accordance with which depth information values for the individual pixels 36 are contained within the database 16. They may have been detected by a specific camera as early as in the initialization phase, for example, said camera capturing distance images, such as by means of a run-time measurement process. In this case, step 52 would be restricted to associating the depth information values with the pixels by merely reading the depth information values from the database 16 and associating them with the individual pixels.

Thus, the result of step 56 is a view of the object under the predefined scene condition. As was mentioned above, several views may be used, which are determined in step 32. In this case, the desired view 64 is obtained, for example, by means of pixel-wise averaging of, or weighting with, the distances from the associated pixel values containing the desired texturing. It is also possible to achieve the previously mentioned interpolation onto a regular pixel array in the event of several views that have been subjected to steps 52 to 56 on the basis of the irregular cloud of points that results from said several views following step 56.

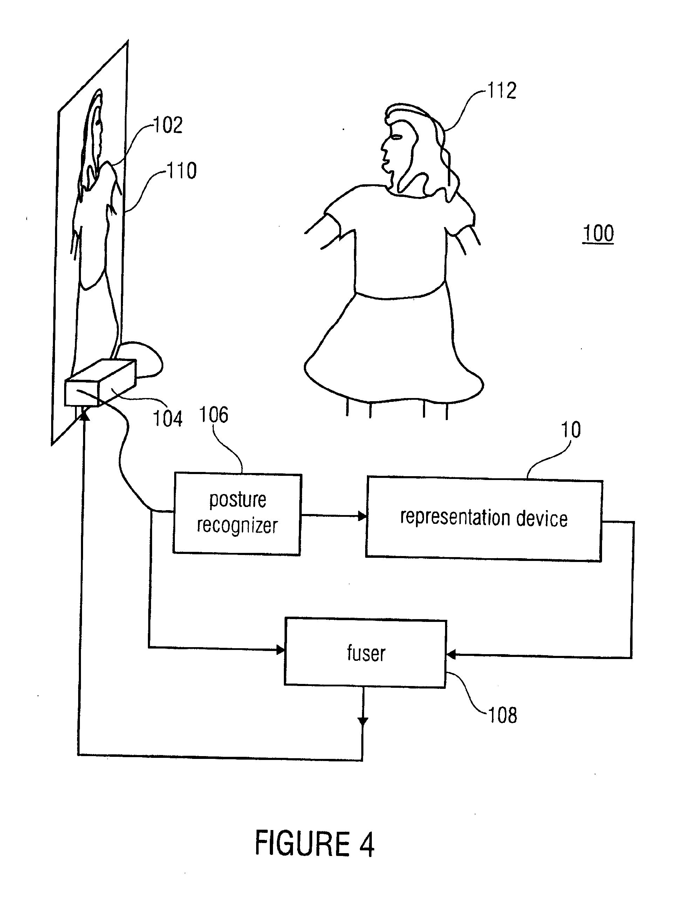

With reference to Fig. 4, an application of the representation device 10 of Fig. 1 will be described below in the context of a device 100 for virtual fitting of objects that may be worn on the body, for example put on, such as a dress 102. By way of example, the device 100 of Fig. 4 comprises a capturing device 104, such as a camera, a posture recognizer 106, the representation device 10 as well as a fuser 108. Optionally, the device 100 may also comprise a display device 110 on which the user 112 sees himself/herself on the display 110 from a perspective from which the camera 104 captures him/her; however, on the display 100 the user 112 is shown a superimposed picture, namely that view of the camera 104 in which the desired dress 102 is superimposed on the person 112. The posture recognizer 106 may, as is indicated in Fig. 4, use the shots obtained by the camera 104 for determining the predefined scene conditions previously mentioned, i.e. the position, alignment and/or posture of the user 112. In addition or alternatively, the posture recognizer 106 may determine body measurements of the person 112. However, said body measurements might also be input by the person 112 via a suitable input device not shown in Fig. 4, such as a keyboard. In addition, it is possible for the posture recognizer 106 to recognize the predefined scene condition or current scene condition even without using the camera shots taken by the camera 104. For example, the posture recognizer 106 uses a 3D measurement system such as a triangulation system, a run-time camera or the like for posture recognition. Alternatively, the posture recognizer 106 may use, in addition to the camera 104, one or more further cameras that capture or observe the scene and/or the person 112 from various directions so as to determine, from the plurality of shots, the predefined or current scene condition, i.e. the position, alignment and/or posture of the person 112.

As was previously mentioned, the representation device 10 subsequently determines the desired view and/or the desired representation of the desired wearable object 102 in the scene condition predefined by the posture recognizer 106.

The fuser 108, in turn, is configured to fuse the camera picture 104 with the view of the wearable object 102 to form a synthesized image; said image thus synthesized may be displayed on the display 110 as is shown in Fig. 4.

The device of Fig. 4 may be configured to operate in real time and/or to generate a fused frame for each frame. To this end, the posture recognizer 106, the representation device 110 and the fuser 108 may be configured, for example, to perform the above-mentioned steps or processes either for each frame or for fewer frames; in the latter case, the fuser 108 is to interpolate, for example, interposed frames from a preceding synthesized frame and a subsequent synthesized frame, respectively, that have been obtained by means of fusion with a representation from the device 10.

With reference to Figs. 2 and 3, an approach was described above according to which the texture map mapping information indirectly defined the mapping 38 of object projection onto the texture map, namely by means of mapping surface sites of the 3D model 48 to the map 42. An alternative is that the mapping 38 is explicitly stored in the database 16. In a first method step 32, one would then look up, in the database 16, that view which shows the object under a scene condition similar to a predefined scene condition. For each of said pixels 36, there would be a brightness value which, independent of the texture or in a textureless manner - for a monochromatic fabric of the skirt 34, as it were - indicates a reflectivity for light projected into the observer's eye. In addition, a texture map position and/or texture map coordinates indicating the position of the pixel of the skirt 34 in the view on the texture map 40 would be associated with each pixel 36. The map projection might be defined, by way of example, by texture coordinates. In addition to the previously mentioned information, there would also be, for each view in the database 16, the parameterizable 3D model describing the approximate shape of the object, or skirt, 34. Unlike the above description, for adapting views, step 52 might not comprise a mutual association between model surface sites and pixels, but in step 52, the pixels 36 of the view(s) selected in step 32 might have associated with them, on the basis of the parameterizable model 48 of the approximate shape of the skirt or object 34, depth information values indicating an approximate measure of a distance between the respective object point of a respective pixel from, e.g., the camera position. The association might occur as follows. The adapter 14 might calculate the previously mentioned 3D model, which corresponds to the view selected in step 32, and would associate with each pixel 36 of the skirt 34 the distance value exhibited by the 3D model 48 at the location which corresponds to said pixel. For potential pixels of the skirt 34 which actually do represent the skirt but might be located outside the projection 48 of the 3D model, provision may be made for the depth information values of the 3D model to be extrapolated to the outside in a suitable manner. Such pixels would obtain, for example, the depth information value of the nearest pixel of the skirt 34 within the contour 48. Alternatively, the model could be selected such that it fully encloses the silhouette, and the contour, which is precise to the pixel, might be defined by segmentation masks. Therefore, the result of step 52 would be a depth image of the skirt 34, said depth image showing the object of the skirt 34 with the associated scene condition. On the basis of said depth information values, the adapter 14 would translationally offset, rotate, tilt or even extend or compress the skirt 34 from the view of step 32 in step 54 so as to adapt the scene condition under which the view represents the skirt 34 to the predefined scene condition. The result of step 54 ultimately would be a lateral displacement or distortion of the regularly arranged pixel positions of the preliminary view determined in step 32 to other positions while maintaining the associated brightness values or texture map vectors. Reflection conditions and the shape of the falls of the folds 46 would not have to be simulated and calculated in this embodiment either. Step 56 would comprise (re-)texturing on the basis of the texture map positions and brightness values associated with the pixels 36. For step 56, the texturer 62 would use the texture map positions so as to associate the texture 58 with the pixels 36, wherein the respective texture map value to which the respective texture map vector is directed would be weighted with the brightness value of the pixel 36. In this manner, the desired view showing the object, or skirt, 34 under the predefined scene condition would be created.

The previously described embodiments thus enable representation of complex and/or deformable objects such as clothing. This representation may also be used for analyzing and synthesizing scenes. Real-time processing while ensuring high representation quality is possible. These properties are enabled by a shift of the computing expenditure to an off-line pre-processing step and by utilization of, e.g., real videos and pictures of test objects. Instead of accurately modeling the objects with regard to all of their properties, one embodiment provides capturing objects which are subject to various representative movements, deformations or changes in lighting during a training phase using cameras, for example. Since this video-based process takes place only once, costly acquisition systems and analysis methods may be utilized. In addition, for simplified processing, suitable test objects may be designed wherein information such as shading and changes in the orientation of the texture may be readily extracted. The look may later on be adapted to the desired appearance by means of re-texturing methods (see 56). In real-time applications, new views may be created from the large number of test shots by means of suitable and fast image interpolation (see 52 and 54), which test shots have a high level of naturalness, since they were calculated from real shots, and since, consequently, all of the information about shading and changes in the orientation of the texture in regions that are rich in detail, such as folds, for example, for various poses are included. Since complex deformable objects, such as pieces of clothing, may include a very large number of degrees of freedom, it is not possible to detect, in the images, and to store all of the potential movements and deformations states. Therefore, in addition to the image information, in accordance with one embodiment, a rough 3D geometry of the object is reconstructed and represented, e.g., by means of a polygonal network. This model (see 48), which only renders the approximate shape and may therefore be described in a compact manner and be quickly animated, may now additionally be used for interpolating new poses and views. The idea of both previously mentioned embodiments consists in utilizing the approximate model (see 48) for dominant movements, deformations or interactions/changes, and to add details, such as shading and changes in the orientation of textures, by means of picture/video-based methods. The exact silhouette may be realized by means of transparent textures on a slightly larger model (see 48). For representing pieces of clothing, for example, the geometry may roughly describe the shape of the wearer's body as well as his/her arms and legs, the movements of which may be estimated, in real time, with algorithms for estimation of poses or for human body tracking (see 106). For any given pose, the view may be interpolated from similar images from the training phase (see 10 in Fig. 4), small differences with regard to the pose stored there being corrected by the geometry (see 52 and 54). Since the video-based representations generated in the off-line step may also contain orientation information regarding the surfaces in addition to the correct shading, new textures, patterns and applications, such as from real shots, may be correctly applied without having to be explicitly model the details.

An important advantage of the above embodiments consists in the possibility of realizing real-time representations of complex objects, such as pieces of clothing, hairstyles, jewelry or pairs of glasses, in Augmented-Reality applications with a high degree of naturalness and realism as well as possibilities of interaction.

In addition, a further advantage is that the hardware for the end uses may be simplified, e.g. by the fact that only few cameras are required, since the detail information may be obtained once-only in an off-line step, and since, therefore, the expenditure is shifted to the content-creation step. The above embodiments are therefore suitable as solutions for the mass market.

The above-described embodiments may be used, for example, for being applied as a virtual fitting room, wherein users virtually design and try on pieces of clothing. In addition, the above-described embodiments may also be employed for advanced visualization of new hairstyles or pairs of glasses and for representing jewelry and watches.

All together, the above-described embodiments enable representation of objects, such as clothing and hairstyles, that may be processed in real time while representing the virtual objects in a natural, high-quality manner.

The above description stated that the views are stored in the database 16 in a texture-independent manner, according to which color and/or brightness variations of the objects have already been subtracted out in the respective view due to a varying texture while the picture was taken, so as to yield a shot for a uniform surface color such as white or any other neutral color. This is not necessarily so. Rather, it is also possible for the views in the database 16 to have de-texturing information associated with them, e.g. in a pixel-dissolved manner, which, when applied to the views, such as by means of pixel-wise multiplication or subtraction, yield an un-textured, monochromatic representation of the object s (34). In addition, de-texturing might also be performed on-line.

In particular, it should be noted that depending on the circumstances, the inventive scheme may also be implemented in software. Implementation may be performed on a digital storage medium, in particular a disc or a CD having electronically readable control signals that may cooperate with a programmable computer system such that the corresponding method is performed. Generally, the invention thus also consists in a computer program product having a program code, stored on a machine-readable carrier, for performing the inventive method when the computer program product runs on a computer. In other words, the invention may thus be realized as a computer program having a program code for performing the method when the computer program runs on a computer.

## Claims

1. A device for representing a piece of clothing under a predefined scene condition defined by a predefined value for a position of the wearer of the piece of clothing (34) and a posture of the wearer of the piece of clothing (34), the piece of clothing having a desired texture (58) entered into a texture map (40) corresponding to an area parameterization of a fabric of the piece of clothing, comprising:
a database storing, for each of a multitude of different scene conditions
a view of the piece of clothing under the respective scene condition, each pixel of which has a brightness value associated therewith, which brightness value yields in a textureless manner a monochromatic appearance of the piece of clothing indicating the reflectivity for light projected into the observer's eye, parameter information associated with the view for the respective scene condition defining a parameterizable 3D model so as to describe an approximate shape of the piece of clothing (34), and
associated texture mapping information specifying a mapping from a surface of the 3D model to regions (42) of texture map which regions are non-continuous and have gaps (44) between each other, and which gaps are not visible due to folds (46) being present in the respective view of the piece of clothing;
a look-up unit (12) configured to look-up, in the database, by means of the predefined scene condition a first view showing the piece of clothing (34) under a scene condition similar to the predefined scene condition, parameter information associated with the respective scene condition and texture mapping information associated with the respective scene condition;
an adapter (14) for creating a second view of the piece of clothing by adapting the parametrizable 3D model by rotation, displacement, scaling or deformation, the parametrizable 3D model describing an approximate shape of the piece of clothing as specified by the parameter information looked-up in the database so that the 3D model from the first view transitions to the predefined scene condition; and
a texturer (62) configured to texture the adapted 3D model on the basis of the texture mapping information and the texture map so that the look of the piece of clothing (34) corresponds, in the second view, to the desired texture (58) by weighting the texture map values associated via the texture map with surface sites of the 3D model with the brightness values of pixels in the first view onto which the surface sites are projected in the first view.

2. The device as claimed in any of the previous claims, wherein the predefined scene condition comprises a predefined value for a posture of arms, a posture of legs, a posture of a trunk and/or of body measurements of a person, and the plurality of views in the database (16) comprise views of the object comprising different values for a posture of arms, a posture of legs, a posture of a trunk and/or of body measurements of a person.

3. The device as claimed in any of the previous claims, wherein the views of the object (34) in the database (16) show the object (34) in an un-textured, monochromatic manner or comprise associated de-texturing information that, if applied to the views by means of pixel-wise multiplication or subtraction, yields an un-textured, monochromatic representation of the object (34).

4. A device for virtual fitting of pieces of clothing, comprising:
a capturing device (104) for creating a default view of a person;
a posture recognizer (106) for recognizing a posture and a position of the person in the default view, defining a recognized scene condition;
a device for representing the piece of clothing, under the recognized scene condition as the desired scene condition, according to any of claims 1 to 3; and
a fuser (108) for fusing the default view and the second view from the device for representing to form a synthesized view of the person in a state in which said person wears, on their body, said object that may be worn on the body.

5. The device as claimed in claim 8, wherein
for each of a plurality of pieces of clothing, a multitude of views of the respective piece of clothing, is stored within the database (16).

6. The device as claimed in claim5, wherein the capturing device is a video camera, and the posture recognizer (106), the look-up unit (12), the adapter (14) and the fuser (108) are configured to process a sequence of shots of the video camera in real time.

7. The device as claimed in claim 6, wherein the sequence of shots is incomplete, and the fuser (108) is configured to form interposed shots from the sequence of shots by means of interpolation.

8. A method for representing a piece of clothing under a predefined scene condition defined by a predefined value for a position of the wearer of the piece of clothing (34) and a posture of the wearer of the piece of clothing (34), the piece of clothing having a desired texture (58) entered into a texture map (40) corresponding to an area parameterization of a fabric of the piece of clothing, comprising:
looking up in a database storing, for each of a multitude of different scene conditions
a view of the piece of clothing under the respective scene condition, each pixel of which has a brightness value associated therewith, which brightness value yields in a textureless manner a monochromatic appearance of the piece of clothing indicating the reflectivity for light projected into the observer's eye, parameter information associated with the view for the respective scene condition defining a parameterizable 3D model so as to describe an approximate shape of the piece of clothing (34), and
associated texture mapping information specifying a mapping from a surface of the 3D model to regions (42) of texture map which regions are non-continuous and have gaps (44) between each other, and which gaps are not visible due to folds (46) being present in the respective view of the piece of clothing;
wherein the looking-up comprises looking-up, in the database, by means of the predefined scene condition a first view showing the piece of clothing (34) under a scene condition similar to the predefined scene condition, parameter information associated with the respective scene condition and texture mapping information associated with the respective scene condition;
creating a second view of the piece of clothing by adapting the parametrizable 3D model by rotation, displacement, scaling or deformation, the parametrizable 3D model describing an approximate shape of the piece of clothing as specified by the parameter information looked-up in the database so that the 3D model from the first view transitions to the predefined scene condition; and
texturing the adapted 3D model on the basis of the texture mapping information and the texture map so that the look of the piece of clothing (34) corresponds, in the second view, to the desired texture (58) by weighting the texture map values associated via the
texture map with surface sites of the 3D model with the brightness values of pixels in the first view onto which the surface sites are projected in the first view.

9. A computer program comprising a program code for performing the method as claimed in claim 8, when the computer program runs on a computer.

## Patentansprüche

1. Eine Vorrichtung zur Darstellung eines Kleidungsstücks unter einer vorgegebenen Szenebedingung definiert durch einen vordefinierten Wert für eine Position des Trägers des Kleidungsstücks (34) und eine Stellung des Trägers des Kleidungsstücks (34), wobei das Kleidungsstück eine gewünschte Textur (58) hat, die in eine Texturkarte (40) eingegeben ist, die einer Flächenparametrisierung eines Gewebes des Kleidungsstückes entspricht, mit einer Datenbank, die für jede einer Vielzahl von Szenebedingungen folgendes speichert:
eine Ansicht des Kleidungsstücks unter der vorgegebenen Szenebedingung, wobei jedes Pixel derselben einen zugeordneten Helligkeitswert aufweist, dieser Helligkeitswert führt zu einer texturlosen Art und Weise wie ein einfarbiges Erscheinungsbild des Kleidungsstücks das Reflexionsvermögen für Licht anzeigt, das in das Auge des Betrachters projiziert wird,
Parameterinformationen, die der Ansicht für die jeweilige Szenebedingung zugeordnet sind, die ein parametrisierbares 3D-Modell definiert, um eine ungefähre Form des Kleidungsstücks (34) zu beschreiben, und
zugeordnete Texturabbildungsinformationen, die eine Abbildung von einer Oberfläche des 3D-Modells auf Regionen (42) einer Texturkarte, deren Regionen nicht durchgehend sind und Zwischenräume (44) zwischen sich aufweisen, und diese Zwischenräume sind nicht sichtbar aufgrund von Falten (46), die in der jeweiligen Ansicht des Kleidungsstücks vorliegen,
einer Nachschlageinheit (12) die konfiguriert ist, um in der Datenbank, anhand der vorgegebenen Szenebedingung, eine erste Ansicht, die das Kleidungsstück (34) unter einer Szenebedingung zeigt, die ähnlich ist wie die vordefinierte Szenebedingung, Parameterinformationen, die der jeweiligen Szenebedingung zugeordnet sind und Texturabbildungsinformationen, die der jeweiligen Szenebedingung zugeordnet sind, nachzuschlagen;
einem Anpasser (14) zum Erzeugen einer zweiten Ansicht des Kleidungsstücks durch Anpassen des parametrisierbaren 3D-Modells durch Drehung, Verschiebung, Skalierung oder Verformung, wobei das parametrisierbare 3D-Modell eine ungefähre Form des Kleidungsstücks beschreibt, wie es durch die in der Datenbank nachgeschlagenen Parameterinformationen spezifiziert ist, so dass das 3D-Modell von der ersten Ansicht in die vorgegebene Szenebedingung übergeht; und einem Texturierer (62), der ausgebildet ist, um auf Basis der Texturkartenabbildungsinformationen und der Texturkarte das angepasste 3D-Modell zu texturieren, so dass das Aussehen des Kleidungsstücks (34) in der zweiten Ansicht der gewünschten Textur (58) entspricht, durch Gewichten der Texturkartenwerte, die über die Texturkarte Oberflächenorten des 3D-Modells zugeordnet sind, mit den Helligkeitswerten der Pixel in der ersten Ansicht, auf die die Oberflächenorte in der ersten Ansicht projiziert sind.

2. Die Vorrichtung gemäß einem der vorhergehenden Ansprüche, bei der die vorgegebene Szenebedingung einen vorgegebenen Wert für eine Stellung von Armen, eine Stellung von Beinen, eine Stellung eines Rumpfes und/oder von Körpermaßen einer Person aufweist, und die Vielzahl von Ansichten in der Datenbank (16) Ansichten des Objektes mit unterschiedlichen Werten für eine Stellung von Armen, eine Stellung von Beinen, eine Stellung eines Rumpfes und/oder von Körpermaßen einer Person aufweist.

3. Die Vorrichtung gemäß einem der vorhergehenden Ansprüche, bei der die Ansichten des Objekts (34) in der Datenbank (16) das Objekt (34) in untexturierter einfarbiger Art und Weise zeigen oder zugeordnete Detexturierungsinformationen aufweisen, die angewendet auf die Ansichten durch pixelweise Multiplikation oder Subtraktion, eine untexturierte einfarbige Darstellung des Objekts (34) ergeben.

4. Eine Vorrichtung zur virtuellen Anprobe von Kleidungsstücken, mit
einer Aufnahmevorrichtung (104) zur Erstellung einer Vorgabeansicht einer Person;
einem Stellungserkenner (106) zum Erkennen einer Stellung und einer Position der Person in der Vorgabeansicht, der eine erkannte Szenebedingung definiert;
eine Vorrichtung zum Darstellen des Kleidungsstücks unter der erkannten Szenebedingung als die gewünschte Szenebedingung, gemäß einem der Ansprüche 1 bis 3; und
einem Verschmelzer (108) zum Verschmelzen der Vorgabeansicht und der zweiten Ansicht von der Vorrichtung zum Darstellen um eine synthetisierte Ansicht der Person in einem Zustand zu bilden, bei dem dieselbe das am Körper tragbare Objekt am Körper trägt.

5. Die Vorrichtung gemäß Anspruch 4, bei der
in der Datenbank (16) für jedes einer Mehrzahl von Kleidungsstücken eine Vielzahl von Ansichten des jeweiligen Kleidungsstücks gespeichert ist,

6. Die Vorrichtung gemäß Anspruch 5, bei der die Aufhahmevorrichtung eine Videokamera ist und der Stellungserkenner (106), die Nachschlageinheit (12), der Anpasser (14) und der Verschmelzer (108) ausgebildet sind, um in Echtzeit eine Folge von Aufnahmen der Videokamera zu verarbeiten.

7. Die Vorrichtung gemäß Anspruch 6, bei der die Folge von Aufnahmen lückenhaft ist und der Verschmelzer (108) so ausgebildet ist, um dazwischenliegende Aufnahmen durch Interpolation aus der Folge von Aufnahmen zu bilden.

8. Ein Verfahren zur Darstellung eines Kleidungsstücks unter einer vorgegebenen Szenebedingung definiert durch einen vordefinierten Wert für eine Position des Trägers des Kleidungsstücks (34) und eine Stellung des Trägers des Kleidungsstücks (34), wobei das Kleidungsstück eine gewünschte Textur (58) hat, die in eine Texturkarte (40) eingegeben ist, die einer Flächenparametrisierung eines Gewebes des Kleidungsstückes entspricht, mit
Nachschlagen in einer Datenbank, die für jede einer Vielzahl von Szenebedingungen folgendes speichert:
eine Ansicht des Kleidungsstücks unter der vorgegebenen Szenebedingung, wobei jedes Pixel derselben einen zugeordneten Helligkeitswert aufweist, dieser Helligkeitswert führ zu einer texturlosen Art und Weise wie ein einfarbiges Erscheinungsbild des Kleidungsstücks das Reflexionsvermögen für Licht anzeigt, das in das Auge des Betrachters projiziert wird,
Parameterinformationen, die der Ansicht für die jeweilige Szenebedingung zugeordnet sind, die ein parametrisierbares 3D-Modell definiert, um eine ungefähre Form des Kleidungsstücks (34) zu beschreiben, und
zugeordnete Texturabbildungsinformationen, die eine Abbildung von einer Oberfläche des 3D-Modells auf Regionen (42) einer Texturkarte, deren Regionen nicht durchgehend sind und Zwischenräume (44) zwischen sich aufweisen, und diese Zwischenräume sind nicht sichtbar aufgrund von Falten (46), die in der jeweiligen Ansicht des Kleidungsstücks vorliegen,
wobei das Nachschlagen das Nachschlagen in der Datenbank, anhand der vorgegebenen Szenebedingung, einer ersten Ansicht, die das Kleidungsstück (34) unter einer Szenebedingung zeigt, die ähnlich ist wie die vordefinierte Szenebedingung, von Parameterinformationen, die der jeweiligen Szenebedingung zugeordnet sind und von Texturabbildungsinformationen, die der jeweiligen Szenebedingung zugeordnet sind, umfasst;
Erzeugen einer zweiten Ansicht des Kleidungsstücks durch Anpassen des parametrisierbaren 3D-Modells durch Drehung, Verschiebung, Skalierung oder Verformung, wobei das parametrisierbare 3D-Modell eine ungefähre Form des Kleidungsstücks beschreibt, wie es durch die in der Datenbank nachgeschlagenen Parameterinformationen spezifiziert ist, so dass das 3D-Modell von der ersten Ansicht in die vorgegebene Szenebedingung übergeht; und
Texturieren, auf Basis der Texturkartenabbildungsinformationen und der Texturkarte, des angepassten 3D-Modells, so dass das Aussehen des Kleidungsstücks (34) in der zweiten Ansicht der gewünschten Textur (58) entspricht, durch Gewichten der Texturkartenwerte, die über die Texturkarte Oberflächenorten des 3D-Modells zugeordnet sind, mit den Helligkeitswerten der Pixel in der ersten Ansicht, auf die die Oberflächenorte in der ersten Ansicht projiziert sind.

9. Ein Computerprogramm mit einem Programmcode zur Durchführung des Verfahrens nach Anspruch 8, wenn das Computerprogramm auf einem Computer abläuft.

## Revendications

1. Dispositif pour représenter un vêtement dans une condition de scène prédéfinie par une valeur prédéfinie pour une position du porteur du vêtement (34) et une posture du porteur du vêtement (34), le vêtement présentant une texture (58) désirée entrée dans un plan de textures (40) correspondant à une paramétrisation de zone d'un tissu du vêtement, comprenant:
une base de données mémorisant pour chacune d'une multitude de conditions de scène différentes
une vue du vêtement dans la condition de scène respective, dont chaque pixel a une valeur de luminosité y associée, valeur de luminosité qui donne de manière sans texture une apparence monochrome du vêtement indiquant la réflectivité de la lumière projetée sur l'oeil de l'observateur, des informations de paramètre associées à la vue pour la condition de scène respective définissant un modèle 3D paramétrisable, de manière à décrire une forme approximative du vêtement (34), et
des informations de mappage de textures associées spécifiant un mappage d'une surface de modèle 3D à des régions (42) du plan de textures, régions qui sont non continues et présentent des interstices (44) entre elles, interstices qui ne sont pas visibles du fait de plis (46) présents dans la vue respective du vêtement;
une unité de consultation (12) configurée pour consulter, dans la base de données, à l'aide de la condition de scène prédéfinie, une première vue montrant le vêtement (34) dans une condition de scène similaire à la condition de scène prédéfinie, des informations de paramètre associées à la condition de scène respective et des informations de mappage de texture associées à la condition de scène respective;
un adaptateur (14) destiné à créer une deuxième vue du vêtement en adaptant le modèle 3D paramétrisable par rotation, déplacement, mise à échelle ou déformation, le modèle 3D paramétrisable décrivant une forme approximative du vêtement tel que spécifiée par les informations de paramètre recherchées dans la base de données, de sorte que le modèle 3D de la première vue transite à la condition de scène prédéfinie; et
un textureur (62) configuré pour texturer le modèle 3D adapté sur base des informations de mappage de texture et du plan de texture, de sorte que l'aspect du vêtement (34) corresponde, dans la deuxième vue, à la texture désirée (58), en pondérant les valeurs de plan de texture associées par l'intermédiaire du plan de texture avec des sites de surface du modèle 3D avec les valeurs de luminosité de pixels dans la première vue sur laquelle les sites de surface sont projetés dans la première vue.

2. Dispositif selon l'une quelconque des revendications précédentes, dans lequel la condition de scène prédéfinie comprend une valeur prédéfinie pour une position des bras, une position des jambes, une position d'un tronc et/ou des mesures du corps d'une personne, et la pluralité de vues dans la base de données (16) comprennent des vues de l'objet comprenant différentes valeurs pour une position des bras, une position des jambes, une position d'un tronc et/ ou des mesures du corps d'une personne.

3. Dispositif selon l'une quelconque des revendications précédentes, dans lequel les vues de l'objet (34) dans la base de données (16) montrent l'objet (34) de manière non texturée, monochrome ou comprennent des informations détexturées associées qui, si elles sont appliquées aux vues à l'aide d'une multiplication ou d'une soustraction par pixel, donnent une représentation monochrome non texturée de l'objet (34).

4. Dispositif pour adapter virtuellement des vêtements, comprenant:
un dispositif de capture (104) destiné à créer une vue par défaut d'une personne;
un identificateur de position (106) destiné à identifier une posture et une position de la personne dans la vue par défaut, définissant une condition de scène identifiée;
un dispositif pour représenter le vêtement, dans la condition de scène identifiée comme condition de scène désirée, selon l'une quelconque des revendications 1 à 3; et
un combineur (108) destiné à combiner la vue par défaut et la deuxième vue du dispositif pour représenter, pour former une vue synthétisée de la personne dans un état dans lequel ladite personne porte sur son corps ledit objet qui peut être porté sur le corps.

5. Dispositif selon la revendication 8, dans lequel
pour chacun de la pluralité de vêtements, une multitude de vues du vêtement respectif sont mémorisées dans la base de données (16).

6. Dispositif selon la revendication 5, dans lequel le dispositif de capture est une caméra vidéo et l'identificateur de position (106), l'unité de consultation (12), l'adaptateur (14) et le combineur (108) sont configurés pour traiter une séquence de prises de vue de la caméra vidéo en temps réel.

7. Dispositif selon la revendication 6, dans lequel la séquence de prises de vue est incomplète, et le combineur (108) est configuré pour former des prises de vues interposées à partir de la séquence de prises de vues au moyen d'une interpolation.

8. Procédé pour représenter un vêtement dans une condition de scène prédéfinie définie par une valeur prédéfinie pour une position du porteur du vêtement (34) et une posture du porteur du vêtement (34), le vêtement présentant une texture désirée (58) entrée dans un plan de texture (40) correspondant à une paramétrisation de zone d'un tissu du vêtement, comprenant:
rechercher dans une mémoire de base de données, pour chacune d'une multitude de conditions de scène différentes,
une vue du vêtement dans la condition de scène respective, dont chaque pixel a une valeur de luminosité y associée, valeur de luminosité qui donne de manière sans texture une apparence monochrome du vêtement indiquant la réflectivité de la lumière projetée dans l'oeil de l'observateur, des informations de paramètre associées à la vue pour la condition de scène respective définissant un modèle 3D paramétrisable, de manière à décrire une forme approximative du vêtement (34), et
des informations de mappage de texture associées spécifiant un mappage d'une surface du modèle 3D à des régions (42) du plan de texture, régions qui sont non continues et présentant des interstices (44) entre elles, interstices qui ne sont pas visibles du fait de plis (46) présents dans la vue respective du vêtement;
dans lequel la consultation comprend le fait de consulter, dans la base de données, au moyen de la condition de scène prédéfinie, une première vue montrant le vêtement (34) dans une condition de scène similaire à la condition de scène prédéfinie, des informations de paramètre associées à la condition de scène respective et des informations de mappage de texture associées à la condition de scène respective;
créer une deuxième vue du vêtement en adaptant le modèle 3D paramétrisable par rotation, déplacement, mise à échelle ou déformation, le modèle 3D paramétrisable décrivant une forme approximative du vêtement tel que spécifié par les informations de paramètre recherchées dans la base de données, de sorte que le modèle 3D de la première vue transite à la condition de scène prédéfinie; et
texturer le modèle 3D adapté sur base des informations de mappage de texture et du plan de texture de sorte que l'aspect du vêtement (34) corresponde, dans la deuxième vue, à la texture désirée (58), en pondérant les valeurs de plan de texture associées par l'intermédiaire du plan de texture avec les sites du surface de modèle 3D aux valeurs de luminosité de pixels dans la première vue sur laquelle sont projetés les sites de surface dans la première vue.

9. Programme d'ordinateur comprenant un code de programme pour réaliser le procédé selon la revendication 8 lorsque le programme d'ordinateur est exécuté sur un ordinateur.
